Europäisches Patentamt

(19) European Patent Office

Office européen des brevets

(11) Publication number: **0 117 671**
**B1**

## EUROPEAN PATENT SPECIFICATION

(12)

(45) Date of publication of patent specification: **15.07.87**

(21) Application number: **84300836.8**

(22) Date of filing: **09.02.84**

(51) Int. Cl.⁴: **B 23 K 20/16**, B 32 B 15/01

(54) **Bonding metals.**

(30) Priority: **12.02.83 GB 8303937**

(43) Date of publication of application:
**05.09.84 Bulletin 84/36**

(45) Publication of the grant of the patent:
**15.07.87 Bulletin 87/29**

(84) Designated Contracting States:
**BE CH DE FR IT LI SE**

(56) References cited:
**BE-A- 489 038**
**DE-B-1 217 734**
**FR-A-2 010 873**
**US-A-4 208 222**

**PATENTS ABSTRACTS OF JAPAN, vol. 7, no. 149 (M-225)1294r, 30th June 1983**

(73) Proprietor: **ALCAN INTERNATIONAL LIMITED**
**1188 Sherbrooke Street West**
**Montreal Quebec H3A 3G2 (CA)**

(72) Inventor: **Grimes, Roger**
**Chalfont Park Gerrards Cross**
**Buckinghamshire, SL9 0QB (GB)**
Inventor: **Ball, Jonathan**
**17 Springate Fields Langley**
**Slough Berkshire, SL3 7DH (GB)**

(74) Representative: **Fisher, Bernard et al**
**Raworth, Moss & Cook 36 Sydenham Road**
**Croydon Surrey CR0 2EF (GB)**

EP 0 117 671 B1

Courier Press, Leamington Spa, England.

**Description**

This invention relates to the bonding together of composite metal bodies.

The technique of diffusion bonding by which two metal objects are joined by the application of modest pressure at an elevated temperature, which is lower than the melting point of the metal, has been known for many years. An article by E. J. Clark in Welding Journal, 1959, Volume 38 pp. 251s—258s described such a technique. However, the number of metals and alloys that can be bonded in this way is limited.

It has therefore been proposed to produce a composite body by providing a metal sheet which cannot readily be diffusion bonded, with a different metal coating layer of lower melting point which readily alloys with the metal of the sheet. During subsequent bonding of the composite bodies, coating layer to coating layer, the layers melt and a new alloy is formed at the interface of the sheet. This operation is in many ways analogous to brazing and has been described as transient liquid phase bonding or TLP. An example of such a proposal is disclosed in G.B. 1,485,051. However, such bonding has been found to be inconsistent in performance. This may be because, in effect, it is the coatings which are bonded together and not the bodies.

There are no known techniques that enable satisfactory diffusion bonding of readily oxidisable metals such as aluminium and magnesium where an extremely adherent, impermeable and chemically complex coating is formed very rapidly upon exposure to atmospheres containing even minute amounts of oxygen.

Notwithstanding the difficulties inherent in the process various attempts to produce diffusion bonds have been made. In several of these, attempts are made to remove the oxide layer from the aluminium by, for example, aqueous pretreatments prior to coating with materials such as silver. US—3,180,022 discloses one such attempt. In an article in the Welding Journal, August 1980 Page 29 to 34, Morley and Caruso described a method for joining valve bodies consisting of either silver plating or copper plating or employing a zinc shim at the interface where joining is to occur. Large clamping pressures, of the order of 26.5 MPa, are applied for extended times and yet the bond tensile strengths achieved were only of the order of 69 MPa. Again these proposals do not provide a direct bond between the bodies.

In more recent attempts to produce a satisfactory diffusion bond more complex procedures of oxide removal from the surface of the aluminium have been employed. Thus in GB—2,117,691A the oxide is removed by a technique of ion bombardment under high vaccum. The clean, oxide free surface is then coated without delay and in the same high vaccum chamber with a metal, such as silver, by an ion plating technique before bringing together the surfaces that are to be bonded at elevated temperature and high pressure. While reasonable bond strengths are quoted very high bonding pressures were employed in the example quoted. The basic disadvantages in a process such as that described lie in the complexity and inevitable associated high cost together with a limitation in the ability to scale up the process to the size necessary for commercial exploitation.

A method which relies on the use of a liquid phase is disclosed in US—3,633,266 in which a zinc alloy is coated on a tapered aluminium tube. This tapered tube is fitted into a corresponding female tube and breaking up of the oxide film formed on the zinc coating is achieved by employing an interference fit between the co-operating components. Additionally, subsequent to joining, a distinct layer of the 'soldering material' remains between the joined components whereas in a truly diffusion bonded joint there should ideally be no such interfacial layer. Thus the method has only limited application as a joining method.

US—3,180,022 (Briggs et al) discloses a method of diffusion bonding an aluminium alloy with silver and other metals. The disclosure contains examples of bonding plugs into the ends of cylinders. No attempt is made to remove the oxide coating from the aluminium alloy. Such a method would produce a weak bond that may be satisfactory in the examples described where separation of the tubes and plugs would require shear forces to be exerted on the bond. However, the technique described would demonstrably be unsatisfactory with bonded bodies which could be subjected to separating forces normal to the plane of the bond tending to "peel" one from the other.

US—3,046,640 (Singleton) discloses cladding aluminium alloy sheets with a layer of zinc and subsequently soldering the zinc layers together. The resultant bond would have poor strength characteristics and between each sheet there would be two discrete layers of zinc and a layer of solder. Much work has been done since Singleton's invention in 1957 but no satisfactory method of bonding together bodies which readily oxidise has been proposed which give consistent, high strength results.

According to one aspect of the present invention there is provided a method of bonding together two bodies of the same or different metals, at least one of which forms an oxidised coating thereon so readily as to be inherently incapable of being diffusion bonded to the other body comprising creating two composite bodies by coating the bodies with metallic layers which are capable of being bonded together by the application of pressure at an elevated temperature lower than the melting point of either body, wherein each layer is applied to its associated body by a process in which:—

1) the oxidised coating on each body is physically broken up and at the same time

2) a new metal surface of increased superficial area is formed on the body while it is in intimate contact with its associated layer to prevent the ingress of air therebetween and the oxidation of the new metal surface so that

2

3) the body and its associated layer become bonded together in metal to metal contact and the layer diffuses into the body over substantially the whole of said increased area

and wherein the composite bodies are bonded together with at least predetermined parts of their layers in direct metal to metal contact with one another by a process which does not increase said surface area and is selected from diffusion bonding and transient liquid phase bonding whereby the layers diffuse into one another and further diffuse into the bodies with any excess metal from the layers being expelled from between said predetermined parts until the discrete identity of the layers has been lost and the bodies are effectively bonded directly together.

When the different metal has a melting point below the melting point of the base metal the elevated temperature may be between said melting points and the composite bodies may be joined by transient liquid phase bonding. Preferably the metallic layer is selected from zinc, silver, copper, titanium, nickel and alloys thereof, which may include other constituents. It may be desirable to use an alloy for the layer if, for example, it is desired to have a particular melting point in the layer or if particular strength requirements are required from the bond. Thus, for example, alloys of zinc with copper and/or magnesium may be selected or alternatively an alloy of zinc and silver could be attractive if a layer with a melting point higher than that of zinc is required. For example a zinc alloy may contain at least one of 0—25% Al; 0—20% Cn; 0—3% Mn and 0—20% Ag by weight. The base metal may be of an alloy which is superplastically deformable so that an integrally stiffened component may be formed by selectively bonding parts of two composite bodies together and superplastically deforming the non-bonded parts of the bodies. In the above bonding proposals the base metals of the bodies may be different.

Bonding by the TLP (transient liquid phase) technique with a rolled-on cladding of zinc can be achieved more satisfactorily and the resulting bond can be of higher strength if the atmosphere in which the bonding operation takes place is controlled to reduce oxygen and water vapour contents to very low levels.

The metal bodies may comprise metal sheets.

Methods of bonding together metal bodies will now be described by way of illustration in the following Examples of which numbers 2 and 3 are comparative.

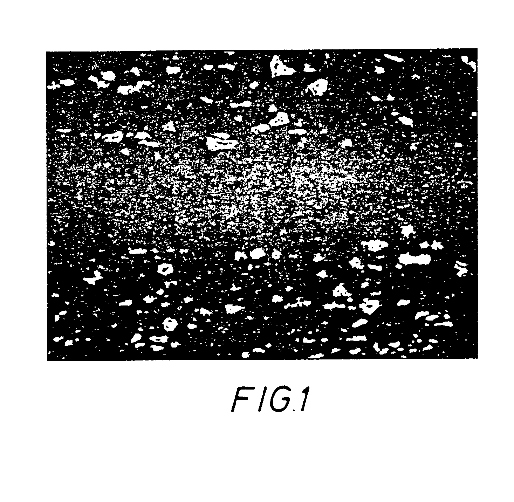

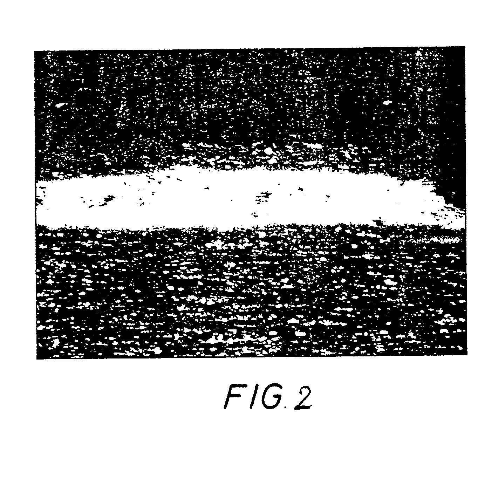

Figures 1 and 2 are backscattered electron micrographs showing some of the joints obtained in the Examples.

Example 1

A cast block of 2004 aluminium alloy having dimensions 165 mm×120 mm×55 mm was clad with a sheet of 1.25 mm commercial purity zinc by hot rolling. Having reduced the gauge to 3.3 mm in this operation the blank was cold rolled to 1.0 mm thickness.

The clad surfaces of pieces of the sheet obtained were pressed together at a pressure of 37 MPa and held at a temperature of 450°C for 30 minutes in air.

Example 2

A foil of commercial purity zinc of 0.1 mm thickness was pressed between two sheets of 2004 aluminium alloy of 1.9 mm thickness at a pressure of 37 MPa and held at a temperature of 450°C for 30 minutes in air.

Example 3

Two sheets of 2004 aluminium alloy of thickness 1.9 mm were degreased in Genklene, a proprietary chlorinated solvent, then immersed in a 4% sodium hydroxide solution at 50°C for 30 seconds, then rinsed in tap water, then immersed in a 30% nitric acid solution at 20°C for 30 seconds and finally rinsed. The sheets were then immersed in a solution containing 425 g of sodium hydroxide and 45 g of zinc oxide per litre of demineralised water at 20°C, then rinsed and dried. The two sheets were pressed together at a pressure of 37 MPa and held at a temperature of 450°C for 30 minutes in air.

The results of the above Examples are shown in Table 1.

TABLE 1

Quality of bond produced with alloy 2004 at 450°C in air using
various interlayers as described in Examples 1 to 4
(bond tested at ambient temperature)

| Example number | Interlayer | Time (mins.) | Pressure (MPa) | Bond achieved |
|---|---|---|---|---|
| 1 | Roll bonded zinc | 30 | 37 | G |
| 2 | Zinc shim | 30 | 37 | P |
| 3 | Zincate coating | 30 | 37 | P |

P=poor, failed with ease on peeling
G=good, on peeling failure occurred in aluminium alloy substrate.

Example 4

Zinc clad aluminium alloy sheets were prepared as in Example 1 but with a gauge of 5 mm after hot rolling and a gauge of 1.5 mm after cold rolling. The 2004 alloy substrate had the same tensile properties as the materials used in Examples 1 to 4. The clad surfaces of the pieces were pressed together at a pressure of 3 MPa and held at a temperature of 450°C for 1 hour in air. The bonded joint thus formed was then solution treated by subjecting it to a temperature of 530°C for 60 minutes and rapidly quenched. It was then age hardened at a temperature of 165°C for 16 hours.

Example 5

By employing a zinc alloy containing a trivalent metal such as aluminium it is known that the rate of oxidation of the alloy is greatly reduced compared to that of pure zinc. This is because oxidation proceeds by the migration of interstitial zinc atoms and the number of those available are significantly reduced if the lattice is doped with a tripositive ion in order to maintain electrical neutrality. Moreover, the duration of the liquid phase will be shorter for a cladding layer of a Zn-Al alloy than if a pure zinc alloy is employed.

Space charge effects at the oxide-air interface of the zinc cladding layer can also limit the rate of oxidation, thus water vapour in the region of the bond can greatly reduce the rate of oxidation of the zinc while reducing gases such as hydrogen or carbon monoxide can reverse the reaction at elevated temperatures.

The same conditions as described in Example 5 were used to prepare two sheets of 1.5 mm thick 2004 aluminium alloy clad with a 99% Zn-1% Al alloy. The pieces were pressed together at a pressure of 3 MPa and held at a temperature of 450°C for 1 hour in air. The joint thus formed was solution treated and aged as in Example 5. Figure 1 is a backscattered electron micrograph of the joint obtained. It shows that the joint is free from porosity and non-bonded areas and has a continuous structure across the bond, the discrete layers having been lost so that the bond is effectively between the aluminium alloy sheets.

Example 6

A composite material comprising electrical purity grade copper (BSS. 1036) coextruded on electrical purity grade aluminium and which was rectangular in cross section was cold rolled to a gauge of 1.5 mm. Pieces of this material were held together at a pressure of 3 MPa and a temperature of 450°C for 1 hour in vaccum.

On testing the bonds produced in the above examples using a T-peel test it was found that in all cases those bonds which had been formed by the methods embodied in this patent application (i.e. Examples 1 and 4 to 6) were strong enough to cause failure of the aluminium substrate rather than the bonds themselves e.g. for the 2004 material this was recorded as greater than 70 $Nmm^{-1}$ whereas the use of a zinc shim resulted in a T-peel strength of 4 $Nmm^{-1}$ and zincate coating of 1 $Nmm^{-1}$. Tensile failure annealed 2004 material typically occurs at 200 $Nmm^{-2}$. Figure 2 is a micrograph showing the bond after the T-peel test. It can be seen that peeling failure occurred in the aluminium alloy substrate and not in the area of the mating surfaces.

The T-peel test was carried out according to ASTM D-1876-69 using test pieces 15 mm wide and a head speed of 20 mm min.$^{-1}$.

It should be noted that 2004 sheet prepared in a manner to that described in Example 1 exhibits superplastic behaviour at 450°C and is, therefore, fairly soft at this temperature. Nevertheless because of the low pressures employed in Example 4 the reduction in gauge resulting from the bonding operation was less than 5%.

The relatively high pressure employed during the pressure temperature cycle described in Example 5 was designed to forge together asperties in the surface of the materials at lower temperatures when the aluminium alloy substrate is relatively hard and aids the expulsion of air from the forging surfaces.

A typical sequence for fabricating an article would include the following steps according to the invention.

1) Cast and scalp an ingot of readly oxidisable metal.

2) Place a plate or plates of cladding metal next to the scalped surface or surfaces and preheat the assembly.

3) Hot roll the assembly to the required gauge.

4) Cold roll the composite material thus formed to the required gauge.

5) Cut the composite material into sheets of the required shape.

6) Mark out and stop-off areas where bonding is not required.

7) Assemble together the desired configuration of sheets in a sandwich form.

8) Heat and apply pressure, either by gas or mechanically, until the sandwich has been at the bonding temperature for sufficient time to bond the sheets together.

Later stages of fabrication may require superplastic forming as disclosed in, for example, GB—A—2,071,547A and/or solution treating and ageing, and/or machining or further welding processes depending upon design requirements.

Thus the present invention enables effective bonding directly between bodies that are subject to rapid oxidation, the layers used to coat each body being substantially dispersed in the final bonding stage as a result of diffusion into the bodies so that no clear cut bonding boundary exists. Since the final bonding stage does not increase the superficial area of the composite bodies selective, accurate, bonding becomes possible which is important when superplastically deformable alloys are used.

**Claims**

1. A method of bonding together two bodies of the same or different metals, at least one of which forms an oxidised coating thereon so readily as to be inherently incapable of being diffusion bonded to the other body comprising creating two composite bodies by coating the bodies with metallic layers which are capable of being bonded together by the application of pressure at an elevated temperature lower than the melting point of either body, wherein each layer is applied to its associated body by a process in which:—
   1) the oxidised coating on each body is physically broken up and at the same time
   2) a new metal surface of increased superficial area is formed on the body while it is in intimate contact with its associated layer to prevent the ingress of air therebetween and the oxidation of the new metal surface so that
   3) the body and its associated layer become bonded together in metal to metal contact and the layer diffuses into the body over substantially the whole of said increased area
   and wherein the composite bodies are bonded together with at least predetermined parts of their layers in direct metal to metal contact with one another by a process which does not increase said surface area and is selected from diffusion bonding and transient liquid phase bonding whereby the layers diffuse into one another and further diffuse into the bodies with any excess metal from the layers being expelled from between said predetermined parts until the discrete identity of the layers has been lost and the bodies are effectively bonded directly together.

2. A method according to Claim 1, wherein each composite body and its associated layer are roll bonded together.

3. A method according to Claim 1, wherein the metallic layer and the body are bonded together by explosive bonding.

4. A method according to Claim 1, wherein the metallic layer and the body are bonded together by extrusion.

5. A method according to Claim 4, wherein the metallic layer and the body are bonded together by hydrostatic extrusion.

6. A method according to Claim 1, wherein the bodies are of a material selected from aluminium and its alloys and magnesium and its alloys.

7. A method according to Claim 1, comprising joining said composite bodies by diffusion bonding.

8. A method according to Claim 1, comprising joining said composite bodies by transient liquid phase bonding.

9. A method according to Claim 1, wherein said different metal layer is selected from zinc, silver, copper, titanium, nickel, and alloys thereof which may include other constituents.

10. A method according to Claim 9, wherein the different metal layer is zinc or a zinc alloy containing at least one of 0—25% aluminium, 0—20% copper, 0—3% magnesium, 0—20% silver by weight.

11. A method according to Claim 1, wherein the metals of the bodies are superplastically deformable, parts only of the bodies are selectively bonded together and the non-bonded parts of the bodies are superplastically deformed.

12. A method according to Claim 1, wherein the bonding process is carried out in a controlled atmosphere selected from an inert gas, carbon monoxide and nitrogen containing water vapour.

**Patentansprüche**

1. Verfahren zur unlösbaren Verbindung zweier Körper gleichen oder verschiedenen Metalls, wobei wenigstens einer eine Oxydhaut derart leicht ausbildet, daß er anhaltend untauglich ist, um mit dem anderen Körper über Diffusions-Kontaktherstellung verbunden zu werden, wobei zwei zusemmengesetzt Körper durch Bedecken der Körper mit Metallschichten gebildet werden, welche unter Anwendung von Druck bei erhöhter Temperatur, welche unterhalb des Schmelzpunktes des jeweiligen Körpers liegt, unlösbar miteinander verbindbar sind, dadurch gekennzeichnet, daß jede Schicht auf dem entsprechenden Körper durch einen Vorgang aufgetragen wird, wobei:
   1) die Oxydhaut auf jedem Körper physikalisch aufgebrochen wird und zur gleichen Zeit
   2) eine neue Metalloberfläche mit vergrößertem Oberflächenbereich auf dem Körper gebildet wird, welche in inniger Verbindung mit ihrer zugehörigen Schicht ist, um einen Zutritt von Luft dazwischen und die Oxydation der neuen Metalloberfläche zu verhindern, so daß
   3) der Körper und seine zugehörige Schicht durch Metall-Metallkontakt unlösbar miteinander verbunden werden und die Schicht im wesentlichen über den gesamten vergrößerten Bereich in den Körper eindiffundiert; und
   wobei die zusammengesetzten Körper zumindest an vorgegebenen Bereichen ihrer Schichten in direktem Metall-Metallkontakt unlösbar durch einen Prozeß miteinander verbunden werden, welcher den Oberflächenbereich nicht erhöht und der Diffusions-Kontaktherstellung und/oder Schmelz-Verbindung umfaßt, wobei die Schichten ineinander diffundieren und weiter in die Körper eindiffundieren, wobei

# 0 117 671

sämtliches überschüssiges Metall der Schichten aus den vergegebenen Bereichen ausgetrieben wird, bis das getrennte Vorhandensein der Schichten aufgehoben worden ist und die Körper wirksam direkt miteinander verbunden sind.

2. Verfahren nach Anspruch 1, wobei jeder der zusammengesetzten Körper und seine zugehörige Schicht über Walzplatzierung unlösbar miteinander verbunden sind.

3. Verfahren nach Anspruch 1, wobei die metallische Schicht und der Körper durch Sprengplattinierung unlösbar miteinander verbunden sind.

4. Verfahren nach Anspruch 1, wobei die metallische Schicht und der Körper durch Extrusion unlösbar miteinander verbunden sind.

5. Verfahren nach Anspruch 4, wobei die metallische Schicht und der Körper durch hydrostatische Extrusion unlösbar miteinander verbunden sind.

6. Verfahren nach Anspruch 1, wobei die Körper aus Aluminium und seinen Legierungen und/oder Magnesium und seinen Legierungen ausgewählt werden.

7. Verfahren nach Anspruch 1, gekennzeichnet, durch Aneinanderfügen der zusammengesetzten Körper durch Diffusions-Kontaktherstellung.

8. Verfahren nach Anspruch 1, gekennzeichnet durch Aneinanderfügen der Zusammengesetzten Körper durch Schmelz-Verbindung.

9. Verfahren nach Anspruch 1, wobei die jeweilige Metallschicht aus Zink, Silber, Kupfer, Titan, Nickel und ihren Legierungen bestehen kann, die auch andere Bestandteile aufweisen können.

10. Verfahren nach Anspruch 9, wobei die jeweilige Metallschicht Zink oder eine Zinklegierung mit wenigstens einen der folgenden Gewichtsprozent-Anteile ist: Aluminium 0 bis 25, Kupfer 0 bis 20, Magnesium 0 bis 3, Silber 0 bis 20.

11. Verfahren nach Anspruch 1, wobei die Metalle der Körper superplastisch verformbar sind, nur Teile der Körper wahlweise unlösbar miteinander verbunden sind und die nicht verbundenen Bereich der Körper superplastisch verformt sind.

12. Verfahren nach Anspruch 1, wobei der Verbindungsvorgang in einer regelbaren Atmosphäre, enthaltend wenigstens einen der folgenden Bestandteile, ausgeführt wird: inertes Gas, Kohlenmonoxid und Stickstoff mit Wasserdampf.

## Revendicàtions

1. Procédé de liaison de deux corps constitués par le même métal ou par des métaux différents dont au moins l'un des deux donne facilement naissance à un revêtement oxydé de manière telle qu'il soit, de façon inhérente, incapable d'être lié par diffusion à l'autre corps, comprenant la création de deux corps composites par revêtement desdits corps à l'aide de couches métalliques qui sont capables d'être liées ensemble par l'application d'une pression à une température élevée qui est inférieure au point de fusion de chacun des corps procédé, dans lequel chaque couche est appliquée à son corps associé par un procédé dans lequel:

1) le revêtement oxydé sur chaque corps est rompu physiquement et simultanément

2) une nouvelle surface métallique d'une superficie accrue est formée sur le corps tout en étant en contact intime avec sa couche associée pour éviter la pénétration de l'aire entre ces deux couches et l'oxydation de la nouvelle surface métallique, de sorte que

3) le corps et sa couche associée deviennent liés avec un contact métal—métal et que la couche diffuse dans le corps sur pratiquement la totalité de ladite superficie accrue, et dans lequel les corps composites sont liés avec au moins des parties pré-déterminées de leurs couches étant en contact direct métal—métal l'une avec l'autre, par une procédé qui n'augmente pas ladite superficie et qui est choisi parmi la liaison par diffusion et la liaison transitoire en phase liquide, grâce à quoi les couches diffusent l'une dans l'autre et diffusent aussi dans lesdits corps, tout excès de métal provenant des couches étant expulsé d'entre lesdites parties prédéterminés jusqu'à ce que l'identité discrète des couches disparaisse et que les corps soient effectivement assemblés directement.

2. Procédé selon la revendication 1, dans lequel chaque corps composite et sa couche associée sont liés par laminage.

3. Procédé selon la revendication 1, dans lequel la couche métallique et le corps sont assemblés par soudage à l'explosion.

4. Procédé selon la revendication 1, dans lequel la couche métallique et le corps sont assemblés par extrusion.

5. Procédé selon la revendication 4, dans lequel la couche métallique et le corps sont assemblés par extrusion hydrostatique.

6. Procédé selon la revendication 1, dans lequel les corps sont constitués par un matériau choisi parmi l'aluminium et ses alliages et le magnésium et ses alliages.

7. Procédé selon la revendication 1, comprenant l'assemblage par liaison par diffusion desdits corps composites.

8. Procédé selon la revendication 1, comprenant l'assemblage desdits corps composites par liaison transitoire en phase liquide.

6

9. Procédé selon la revendication 1, dans lequel ladite couche métallique différente est choisie parmi le zinc, l'argent, le cuivre, le titane, le nickel et leur alliages qui peuvent comprendre d'autres constituants.

10. Procédé selon la revendication 9, dans lequel la couche métallique différente est constituée par du zinc ou par un alliage de zinc contenant, en poids, au moins l'un des constituants choisis parmi 0—25% d'aluminium, 0—20% de cuivre, 0—3% de magnésium, 0—20% d'argent, en poids.

11. Procédé selon la revendication 1, dans lequel les métaux des corps sont déformables de façon superplastique, et dans lequel seules des parties des corps sont liées sélectivement et les parties non liées des corps sont déformées de façon superplastique.

12. Procédé selon la revendication 1, dans lequel le procédé de liaison est effectué sous atmosphère contrôlée choisis parmi un gaz inerte, du monoxyde de carbone et de l'azote contenant de la vapeur d'eau.

*FIG.1*

FIG.2